# EUROPÄISCHE PATENTANMELDUNG

(11) **EP 0 601 394 A2**
(43) Veröffentlichungstag der Anmeldung: **15.06.1994**
(21) Anmeldenummer: 93118947.6
(22) Anmeldetag: 25.11.1993
(51) Int. Cl.: F16S 3/00, F16S 1/00

(54) **Gestaltung von ein- oder mehrzelligen Hohlprofilen, insbesondere Aluminium-Strangpressprofilen**

(30) Priorität: 05.12.1992 DE 4241003
(71) Anmelder: DUEWAG AKTIENGESELLSCHAFT, D-47829 Krefeld (DE); ALUSINGEN GmbH, D-78224 Singen (DE)
(72) Erfinder: Zwicke, Michael, Dr.-Ing., D-47877 Willich (DE); Hoffmann, Hajo, Dr.-Ing., D-52074 Aachen (DE); Müller, Walter, Dipl.-Ing., D-78247 Hilzingen-Riedheim (DE)

(57) **Zusammenfassung**

Ein- oder mehrzellige Hohlprofile, insbesondere Aluminium-Strangpreßprofile, mit denen statisch und/oder dynamisch beanspruchbare Konstruktionen erstellbar sind, bestehen im wesentlichen aus streifenförmigen Teilsegmenten (1, 2) und Knotenstellen (3) zur gerundeten Verbindung dieser Teilsegmente (1, 2). Um solche Hohlprofile ohne Erhöhung der Menge des eingesetzten Materials so zu gestalten, daß größere Steifigkeit und Festigkeit gegenüber Verformungen der Profilkontur bzw. gegenüber Kräften und Momenten erzielt werden, die quer zur Profillängsrichtung zu übertragen sind, weisen die streifenförmigen Teilsegmente (1, 2) im Mittenbereich zwischen den Knotenstellen (3) eine verringerte Wanddicke (d1) und in der Nähe der Knotenstellen (3) eine vergrößerte Wanddicke (d2) auf.

## Beschreibung

Die Erfindung betrifft eine Gestaltung von ein- oder mehrzelligen Hohlprofilen, insbesondere Aluminium-Strangpreßprofilen, mit denen statisch und/oder dynamisch beanspruchbare Konstruktionen erstellbar sind, wobei das Hohlprofil im wesentlichen aus streifenförmigen Teilsegmenten und Knotenstellen zur gerundeten Verbindung dieser Teilsegmente besteht.

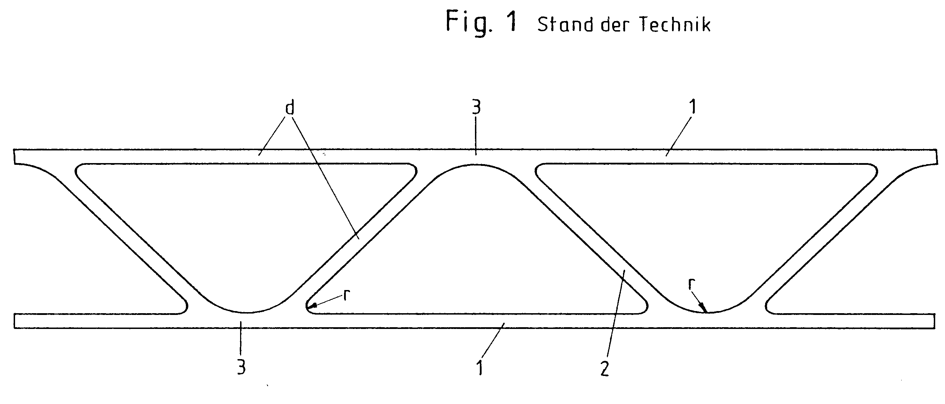

Bei bekannten Profilen mit den vorgenannten Merkmalen (beispielsweise gemäß Fig. 1) sind die streifenförmigen Teilsegmente - ähnlich einem ebenen oder gebogenen Blech - mit konstanter Wanddicke ausgebildet; der Übergang dieser Teilsegmente in die Knotenstellen erfolgt durch meist kleinere Radien gerundet. Solche Profile haben eine relativ geringe Steifigkeit bzw. Festigkeit gegenüber Verformungen ihrer Profilkontur.

Der Erfindung liegt die Aufgabe zugrunde, ein Hohlprofil der gattungsgemäßen Art ohne Erhöhung der Menge des eingesetzten Materials so zu gestalten, daß größere Steifigkeit und Festigkeit gegenüber Verformungen der Profilkontur bzw. gegenüber Kräften und Momenten erzielt werden, die quer zur Profillängsrichtung (bei Strangpreßprofilen quer zur Preßrichtung) zu übertragen sind.

Diese Aufgabe wird erfindungsgemäß dadurch gelöst, daß die streifenförmigen Teilsegmente im Mittenbereich zwischen den Knotenstellen eine verringerte Wanddicke und in der Nähe der Knotenstellen eine vergrößerte Wanddicke aufweisen.

Vorteilhafte Ausgestaltungen der Erfindung sind in den Unteransprüchen 2 bis 5 genannt.

Die mit dem Gegenstand nach der Erfindung erzielbaren Vorteile liegen insbesondere in folgendem:
- Das Hohlprofil hat bei gleichem Materialeinsatz eine größere Steifigkeit und Festigkeit gegenüber Verformungen der Profilkontur bzw. gegenüber Kräften und Momenten, die quer zur Profillängsrichtung zu übertragen sind. Außerdem besteht eine wesentlich erhöhte Dauer- oder Betriebsfestigkeit, und zwar wegen der in ihrer Wirkung weitestgehend beseitigten lokalen Spannungskonzentrationen.
- Durch die erfindungsgemäße Profilgestaltung kann auch Material und damit Gewicht eingespart werden, vor allem wenn man von gleicher Festigkeit bzw. Steifigkeit in Querrichtung wie bei herkömmlichen Profilen ausgeht.
- Wegen der höheren Eigenstabilität der Hohlprofile sind an den damit erstellten Konstruktionen in der Regel keine der Queraussteifung dienenden zusätzlichen Elemente erforderlich, wodurch Kosten bei der Fertigung eingespart werden und die Konstruktionen selbst durch Wegfall von Schweißnähten und deren negativen Wirkungen, wie herabgesetzte Festigkeit, Verzug, Eigenspannung, verbessert werden.

Ausführungsbeispiele der Erfindung sind in der Zeichnung dargestellt und werden im folgenden näher beschrieben.
Es zeigen
- Fig. 1: ein in bekannter Weise gestaltetes Hohlprofil, im Schnitt quer zur Längsrichtung,
- Fig. 2: ein mehrzelliges, dreieckförmig ausgesteiftes Hohlprofil nach der Erfindung, im Querschnitt entsprechend Fig. 1,
- Fig. 3: ein plattenförmiges Hohlprofil,
ebenfalls mit den Merkmalen der Erfindung,
- Fig. 4: ein weiteres erfindungsgemäßes Hohlprofil mit nicht zueinander parallelen Außenflächen.

Die gezeigten Hohlprofile bestehen im wesentlichen aus streifenförmigen Teilsegmenten 1, 2 und Knotenstellen 3, in denen die Teilsegmente 1, 2 zusammentreffen.

Wie aus Fig. 1 ersichtlich, sind die streifenförmigen Teilsegmente 1, 2 des herkömmlichen Hohlprofils mit konstanter Wanddicke d ausgebildet. Der Übergang der Teilsegmente 1, 2 in die Knotenstellen 3 erfolgt über Rundungen mit dem konstanten Radius r.

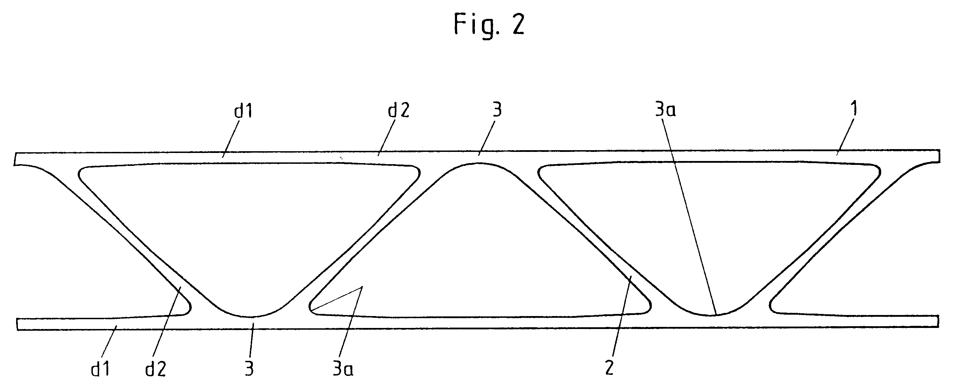

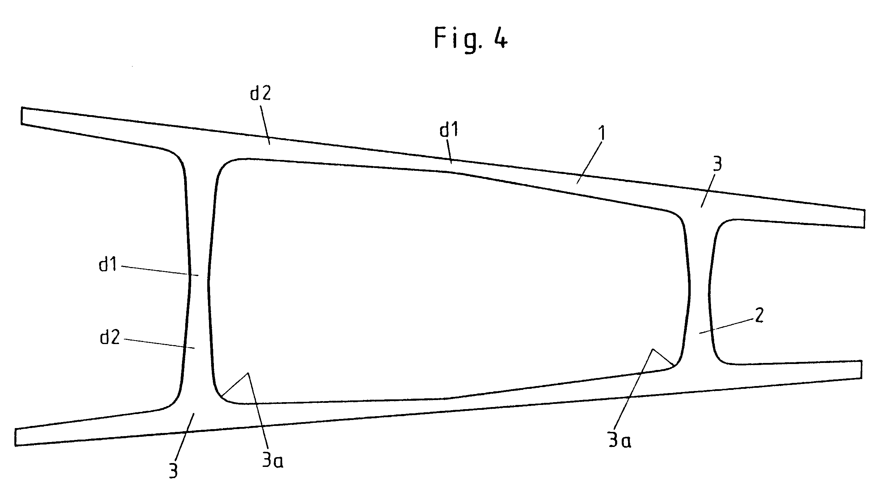

Bei den erfindungsgemäßen Hohlprofilen gemäß Fig. 2 bis 4 weisen die streifenförmigen Teilsegmente 1, 2 im Mittenbereich zwischen den Knotenstellen 3 eine verringerte Wanddicke d1 (kleiner als d des herkömmlichen Profils) und in der Nähe der Knotenstellen 3 eine vergrößerte Wanddicke d2 (größer als d) auf. Dabei kann die Wanddicke d1, soweit es die Festigkeitsanforderungen zulassen, bis auf die durch das Strangpressen bedingte Mindestwandstärke reduziert sein.

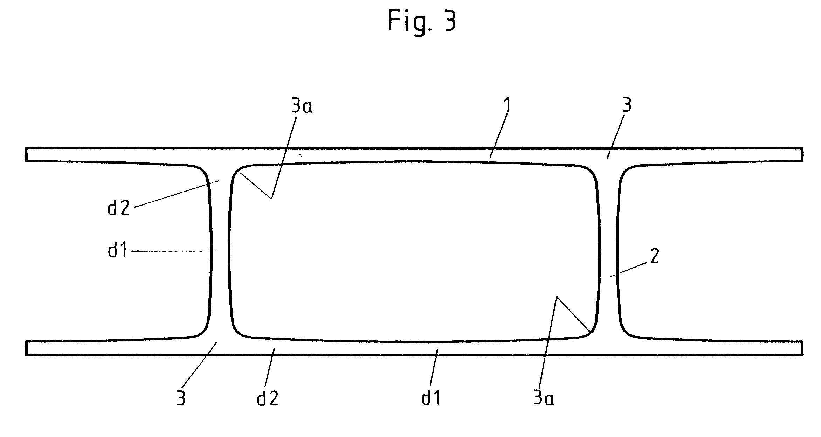

Die Wanddicke d1 nimmt derart zu, daß bei Querbiegemomenten, die in den streifenförmigen Teilsegmenten 1, 2 wirksam sind, zumindest näherungsweise konstante Randspannungen auftreten. Der Ausdruck Randspannungen bezeichnet die Spannungen in den äußeren Fasern der Teilsegmente 1 und 2. Weiter sind die Wanddicken d2 der unter einem Winkel zueinander verlaufenden Teilsegmente 1, 2 im Sinne gleicher Randspannungen aufeinander abgestimmt. So sind z. B. in Fig. 3 die Wanddicken d2 der Teilsegmente 2 um den Faktor Wurzel 2 größer als die Wanddicken d2 der Teilsegmente 1.

Zwischen den streifenförmigen Teilsegmenten 1, 2 und den Knotenstellen 3 - siehe Fig. 2 bis 4 - sind Ausgleichsbögen 3a mit sich stetig ändernder Krümmung angeordnet. Diese Ausgleichsbögen 3a entsprechen beispielsweise der Kurve einer Sinushalbwelle.

Die Hohlprofile nach den Figuren 2 bis 4 sind für statisch und/oder dynamisch beanspruchte Konstruktionen bestens geeignet, beispielsweise bei Schienenfahrzeugen, Lastkraftwagen, Schiffen, Behältern und Gerüsten sowie Maschinenständern und Maschinenträgern.

### Liste der Bezugszeichen

- 1: streifenförmiges Teilsegment
- 2: streifenförmiges Teilsegment
- 3: Knotenstelle
- 3a: Ausgleichsbogen
- d: konstante Wanddicke
- d1: verringerte Wanddicke
- d2: vergrößerte Wanddicke
- r: stetiger Radius

## Patentansprüche

1. Gestaltung von ein- oder mehrzelligen Hohlprofilen, insbesondere Aluminium-Strangpreßprofilen, mit denen statisch und/oder dynamisch beanspruchbare Konstruktionen erstellbar sind, wobei das Hohlprofil im wesentlichen aus streifenförmigen Teilsegmenten (1, 2) und Knotenstellen (3) zur gerundeten Verbindung dieser Teilsegmente (1, 2) besteht, dadurch gekennzeichnet, daß die streifenförmigen Teilsegmente (1, 2) im Mittenbereich zwischen den Knotenstellen (3) eine verringerte Wanddicke (d1) und in der Nähe der Knotenstellen (3) eine vergrößerte Wanddicke (d2) aufweisen.

2. Profilgestaltung nach Anspruch 1, dadurch gekennzeichnet, daß die Wanddicke (d1) der streifenförmigen Teilsegmente (1, 2) derart zunimmt, daß bei in diesen Segmenten (1, 2) wirksamen Querbiegemomenten zumindest näherungsweise konstante Randspannungen auftreten.

3. Profilgestaltung nach Anspruch 1 oder 2, dadurch gekennzeichnet, daß zwischen den streifenförmigen Teilsegmenten (1, 2) und den Knotenstellen (3) Ausgleichsbögen (3a) mit sich stetig ändernder Krümmung angeordnet sind.

4. Profilgestaltung nach Anspruch 3, dadurch gekennzeichnet, daß die Ausgleichsbögen (3a) der Kurve einer Sinushalbwelle entsprechen.

5. Profilgestaltung nach einem der Ansprüche 1 bis 4, dadurch gekennzeichnet, daß die vergrößerten Wanddicken (d2) der unter einem Winkel zueinander verlaufenden streifenförmigen Teilsegmente (1, 2) im Sinne gleicher Randspannungen aufeinander abgestimmt sind.
